# EUROPÄISCHE PATENTSCHRIFT

(11) **EP 2 835 388 B1**
(45) Veröffentlichungstag und Bekanntmachung des Hinweises auf die Patenterteilung: **28.12.2016**
(21) Anmeldenummer: 14178524.6
(22) Anmeldetag: 25.07.2014
(51) Int. Cl.: C08G 12/00

(54) **VERFAHREN ZUR HERSTELLUNG VON AMINOPLASTLÖSUNGEN**
METHOD FOR THE PREPARATION OF AMINOPLAST SOLUTIONS
PROCÉDÉ DE FABRICATION DE SOLUTIONS AMINOPLASTES

(30) Priorität: 06.08.2013 EP 13179363
(43) Veröffentlichungstag der Anmeldung: 11.02.2015
(73) Patentinhaber: BASF SE, 67056 Ludwigshafen am Rhein (DE)
(72) Erfinder: Finkenauer, Michael, 67550 Worms (DE); Fuchs, Evelyn, 68199 Mannheim (DE); Lunkwitz, Ralph, 67434 Neustadt (DE); Reese, Oliver, 68163 Mannheim (DE); Roschmann, Konrad, 68526 Ladenburg (DE); Schmidt, Michael, 67373 Dudenhofen (DE); Reif, Martin, 67354 Römerberg (DE); Weinkötz, Stephan, 67434 Neustadt (DE)
(74) Vertreter: BASF IP Association

(56) Entgegenhaltungen:
- EP-A2- 0 346 864
- WO-A1-2012/080338

## Beschreibung

Die vorliegende Erfindung betrifft ein Verfahren zur diskontinuierlichen bzw. kontinuierlichen Herstellung von Aminoplastlösungen aus Formaldehyd und Aminoplastbildnern in einer Rührkesselkaskade mit mindestens drei Rührkesseln unter speziellen Bedingungen im ersten und zweiten Kessel.

Aus der DE-A-21 09 754 ist ein Verfahren zur kontinuierlichen Herstellung von Aminoplastlösungen aus Formaldehyd und Aminoplastbildnern, insbesondere Harnstoff, in mindestens drei hintereinander geschalteten Rührkesseln bei erhöhter Temperatur und unter mehrmaliger Veränderung des Molverhältnisses der Reaktionskomponenten zueinander bekannt. Das Katalysatorgemisch besteht hierbei aus Amin und Säure und wird dem ersten Reaktionskessel zugeführt, wo sich eine Temperatur von ungefähr 95°C einstellt. In diesem Verfahren ist es wichtig, dass im jeweils folgenden Rührkessel ein deutlich tieferer pH-Wert herrscht als im vorangegangenen Rührkessel, um auf diese Weise von Kessel zu Kessel sprunghaft höhere gleichmäßige Vernetzungsgeschwindigkeiten einzustellen. Diese sprunghafte Erhöhungen der Kondensationsgeschwindigkeit machen ein Abstoppen der Reaktion bei einem definierten Kondensationsgrad schwierig, insbesondere wenn höhere Molmassen als Maß für einen höheren Kondensationsgrad erwünscht sind, besteht die Gefahr des kompletten Durchpolymerisierens im Reaktor, was einen Produktionsausfall und einen hohen Reinigungsaufwand nach sich zieht.

Der vorliegenden Erfindung lag daher die Aufgabe zugrunde, den zuvor genannten Nachteilen abzuhelfen, insbesondere ein kontinuierliches Verfahren zu finden, mit dem sich Aminoplastlösungen mit höheren Kondensationsgraden kontrolliert und in gleichbleibender Qualität herstellen lassen.

Demgemäß wurde ein neues und verbessertes Verfahren zur kontinuierlichen Herstellung von Aminoplastlösungen durch diskontinuierliche oder kontinuierlichen, bevorzugt kontinuierliche Kondensation von Aminoplastbildnern mit Formaldehyd in einer in Reihe geschalteten Rührkesselkaskade mit mindestens drei Rührkesselvorrichtungen A, B und C gefunden, welches dadurch gekennzeichnet ist, dass man
a) in Vorrichtung A eine Mischung enthaltend Formaldehyd und Harnstoff im Molverhältnis von 2,3:1 bis 2,9:1 und Wasser bei einem pH Wert von 6 bis 8, eingestellt mittels einer Base, bei einer Temperatur von 80 bis 85°C, wobei Vorrichtung A aus einem oder mehreren, also einem bis zehn, bevorzugt einem bis fünf, besonders bevorzugt einem bis drei, insbesondere einem oder zwei parallelen oder in Reihe geschalteten Rührkesseln, ganz besonders bevorzugt aus einem Rührkessel, besteht,
b) in Vorrichtung B bei einem Molverhältnis von Formaldehyd zu Harnstoff von 1,9:1 bis 2,6:1, wobei Vorrichtung B aus einem oder mehreren Rührkesseln besteht, in der das Molverhältnis von Formaldehyd zu Harnstoff, gegebenenfalls durch weitere Harnstoffzugabe, stufenweise auf minimal 1,9:1 abgesenkt wird, bei einem pH-Wert von 3,5 bis 5,5, der nahezu konstant gehalten wird, bei einer Temperatur von 100 bis 105°C und einer mittleren Verweilzeit von 10 bis 90 min in der gesamten Vorrichtung B umsetzt,
c) in Vorrichtung C bei einer Temperatur von 90 bis 100°C den pH Wert auf mindestens 5,9 erhöht und das Molverhältnis von Formaldehyd zu Harnstoff auf 1,7:1 bis 1,4:1 senkt, wobei Vorrichtung C aus einem oder mehreren Rührkesseln besteht und
d) durch Zugabe von Harnstoff bei Temperaturen von 15 bis 100°C ein Endmolverhältnis von Formaldehyd zu Harnstoff von 0,7:1 bis 1,28:1 und einen pH Wert von mindestens 7 einstellt.

Das erfindungsgemäße Verfahren kann wie folgt durchgeführt werden:
Man kann in Vorrichtung A eine Mischung enthaltend Formaldehyd und Harnstoff im Molverhältnis von 2,3:1 bis 2,9:1 und Wasser bei einer Temperatur von 80 bis 85°C und einem pH Wert von 6 bis 8, bevorzugt 6,3 bis 7,3 in einem oder mehreren parallel oder in Reihe geschalteten Rührkesseln umsetzen, wobei das Gewichtsverhältnis von (Formaldehyd+Harnstoff) zu Wasser in der Regel in weiten Grenzen variiert werden kann und in der Regel 0,2:1 bis 1,8:1, bevorzugt 0,5:1 bis 1,5:1, besonders bevorzugt 0,8:1 bis 1,3:1 beträgt. Der pH Wert kann mittels einer Base eingestellt werden. Die Vorrichtung A kann aus einem oder mehreren parallel oder in Reihe geschalteten, beispielsweise einem bis zehn parallel oder in Reihe geschalteten, bevorzugt einem bis fünf parallel oder in Reihe geschalteten, besonders bevorzugt einem bis drei parallel oder in Reihe geschalteten, insbesondere einem oder zwei parallel oder in Reihe geschalteten Rührkesseln, ganz besonders bevorzugt aus einem Rührkessel, bestehen.

Diskontinuierlich, bevorzugt kontinuierlich kann das Reaktionsgemisch aus Vorrichtung A in Vorrichtung B überführt und das Molverhältnis von Formaldehyd zu Harnstoff auf 1,9:1 bis 2,6:1 eingestellt werden. Die Einstellung des Molverhältnisses kann in einer oder mehreren Stufen durch Zugabe von Harnstoff in fester oder gelöster Form erfolgen. Die Umsetzung wird in der Regel bei einer Temperatur von 100 bis 105°C und einem pH Wert von 3,5 bis 5,5, bevorzugt 3,9 bis 4,8, wobei der pH-Wert nahezu konstant, also mit einer Schwankungsbreite von ± 0,3, bevorzugt ±0,2, besonders bevorzugt ±0,15 gehalten werden sollte, und einer Verweilzeit von 10 bis 90 min in einem oder mehreren parallel oder in Reihe geschalteten Rührkesseln durchgeführt. Der pH Wert kann mittels einer Säure eingestellt werden. Die Vorrichtung B kann aus einem oder mehreren parallel oder in Reihe geschalteten, beispielsweise einem bis fünfzehn parallel oder in Reihe geschalteten, bevorzugt einem bis acht parallel oder in Reihe geschalteten, besonders bevorzugt einem bis sechs parallel oder in Reihe geschalteten, insbesondere einem bis fünf parallel oder in Reihe geschalteten, ganz besonders bevorzugt drei bis fünf parallel oder bevorzugt in Reihe geschalteten Rührkesseln bestehen.

Diskontinuierlich, bevorzugt kontinuierlich kann das Reaktionsgemisch aus Vorrichtung B in Vorrichtung C überführt und das Molverhältnis von Formaldehyd zu Harnstoff auf 1,7:1 bis 1,4:1 gesenkt werden. Die Einstellung des Molverhältnisses kann in einer oder mehreren Stufen durch Zugabe von Harnstoff in fester oder gelöster Form erfolgen. Die Umsetzung wird in der Regel bei einer Temperatur von 90 bis 100°C, bevorzugt 93 bis 98°C und einem pH Wert von mindestens 5,9, also 5,9 bis 7,5, bevorzugt 6,0 bis 6,7 in einem oder mehreren parallel oder in Reihe geschalteten Rührkesseln durchgeführt. Die Vorrichtung C kann aus einem oder mehreren, also einem bis zehn, bevorzugt einem bis fünf, besonders bevorzugt einem bis drei, insbesondere einem oder zwei parallelen oder in Reihe geschalteten Rührkesseln, ganz besonders bevorzugt aus einem Rührkessel, bestehen.

Anschließend kann durch Zugabe von Harnstoff bei Temperaturen von 15 bis 100°C, bevorzugt 40 bis 95°C, ein Endmolverhältnis von Formaldehyd zu Harnstoff von 0,7:1 bis 1,28:1 und durch Zugabe einer Base ein pH Wert von mindestens 7, also 7 bis 10, bevorzugt 7,5 bis 9,5 einstellt werden. Gegebenenfalls kann eine Aufkonzentration durch Destillation gegebenenfalls unter reduziertem Druck zu Endviskositäten von 250 bis 700 mPas erfolgen.

Die erfindungsgemäß hergestellten Harnstoff-Formaldehyd-Harze weisen in der Regel eine Dispersität (=Gewichtsmittel M_{w} der Molmasse/Zahlenmittel Mₙ der Molmasse) von 20 bis 80, bevorzugt von 25 bis 70, besonders bevorzugt von 30 bis 60 auf.

Das erfindungsgemäße Verfahren, bevorzugt die Verfahrensstufen a), b), c) und d), wird/werden in der Regel bei einem Druck von 0,3 bis 3 bar, bevorzugt 0,5 bis 2 bar, besonders bevorzugt bei 0,8 bis 1,2, insbesondere bei Normaldruck (Atmosphärendruck) durchgeführt.

Der Harnstoff kann sowohl in Form von festem Harnstoff als auch bevorzugt als Harnstofflösung eingesetzt werden. Die Harnstofflösungen enthalten Harnstoff in geeigneten Lösungsmitteln. Geeignete Lösungsmittel sind Wasser, Alkohole wie Methanol oder Ethanol, Glycerin oder deren Gemische, bevorzugt Wasser oder Wasser/Alkohol-Gemische, besonders bevorzugt Wasser.
Die Konzentration des Harnstoffes in Lösung kann in weiten Bereichen variiert werden und beträgt in der Regel 30 bis 85 Gew.-%, bevorzugt 40 bis 80 Gew.-%, besonders bevorzugt 50 bis 70 Gew.-%.

Die Harnstofflösungen sind in der Regel wässrige Lösungen in einem Konzentrationsbereich von 30 bis 85 Gew.-%, bevorzugt 40 bis 80 Gew.-%, besonders bevorzugt 50 bis 70 Gew.-%.

Formaldehyd kann sowohl in Form von Paraformaldehyd als auch bevorzugt als Formaldehydlösung eingesetzt werden. Die Formaldehydlösungen enthalten Formaldehyd in geeigneten Lösungsmitteln. Geeignete Lösungsmittel sind Wasser oder Alkohole wie Methanol oder Ethanol oder deren Gemische, bevorzugt Wasser und Wasser/Alkohol-Gemische, besonders bevorzugt Wasser.

Die Konzentration des Formaldehyds in Lösung kann in weiten Bereichen variiert werden und beträgt in der Regel 5 bis 70 Gew.-%, bevorzugt 30 bis 60 Gew.-%, besonders bevorzugt 40 bis 50 Gew.-%.

Die Formaldehydlösungen sind in der Regel wässrige Lösungen in einem Konzentrationsbereich von 5 bis 70 Gew.-%, bevorzugt 30 bis 60 Gew.-%, besonders bevorzugt 40 bis 50 Gew.-%.

Formaldehyd und Harnstoff können auch zumindest teilweise in Form wässriger Formaldehyd-Harnstoff-Lösungen und/oder wässrigen Formaldehyd-Harnstoff-Vorkondensate eingesetzt werden.

In einer bevorzugten Ausführungsform des erfindungsgemäßen Verfahrens besteht die Vorrichtung B aus mindestens 2 Rührkesseln, wobei das Molverhältnis von Formaldehyd zu Harnstoff im ersten Kessel der Vorrichtung B 2,6:1 bis 2,25:1 beträgt und dann in einem weiteren Kessel der Vorrichtung B durch Zugabe von Harnstoff in fester oder gelöster Form auf 2,2:1 bis 1,9:1 abgesenkt wird.

In einer weiteren bevorzugten Ausführungsform des erfindungsgemäßen Verfahrens besteht die Vorrichtung B aus mindestens 3 Rührkesseln, wobei das Molverhältnis von Formaldehyd zu Harnstoff im ersten Kessel der Vorrichtung B 2,6:1 bis 2,3:1 beträgt, in einem weiteren Kessel der Vorrichtung B durch Zugabe von Harnstoff in fester oder gelöster Form auf 2,25:1 bis 2,1:1 und in wiederum einem weiteren Kessel der Vorrichtung B auf 2,05:1 bis 1,9:1 abgesenkt wird.

In einer weiteren bevorzugten Ausführungsform des erfindungsgemäßen Verfahrens erfolgt die Harnstoffzugabe in d) in zwei oder mehr Schritten.

In einer weiteren bevorzugten Ausführungsform wird die Harnstoff-Formaldehyd-Harz-Lösung vor der letzten Zugabe an Harnstoff und damit der Einstellung des Endmolverhältnisses in d) destilliert.

Eine besonders bevorzugte Ausführungsform des erfindungsgemäßen Verfahrens besteht darin, dass man die Menge der Säurezugabe in Vorrichtung B so wählt, dass die hergestellten Harnstoff-Formaldehyd-Harze in der Lösung ein Gewichtsmittel des Molekulargewichts Mw von 15.000 bis 50.000 g/mol, bevorzugt 17.000 bis 40.000 g/mol, besonders bevorzugt 18.000 bis 36.000 g/mol aufweisen. Dazu können von den frisch hergestellten Harnstoff-FormaldehydHarzen Proben mittels Gel-Permeations-Chromatographie (GPC) analysiert werden und die Zugabemenge der Säure in Vorrichtung B derart angepasst werden, dass das Gewichtsmittel des Molekulargewichts M_{W} im gewünschten Bereich liegt. Liegt M_{W} unterhalb des gewünschten Bereichs, wird die Zugabemenge der Säure bei nahezu gleichbleibender Verweilzeit in Vorrichtung B angehoben, liegt M_{W} oberhalb des gewünschten Bereichs wird die Zugabemenge der Säure bei nahezu gleichbleibender Verweilzeit in Vorrichtung B abgesenkt.

Die hier angegebenen mittleren Molmassen wurden folgendermaßen bestimmt:

### Größenausschlusschromatographie

Elutionsmittel: Hexafluorisopropanol + 0,05% Trifluoressigsäure-Kaliumsalz
Säulentemperatur: 40°C
Durchflußgeschwindigkeit: 1 mL/min
Injektion: 50 μL
Konzentration: 1,5 mg/mL
Die Probelösungen wurden über Millipore Millex FG (0,2 μm) filtriert.
Trennsäulen-Kombination:

| Säulen | | | Trennmaterial | Säulenbezeichnung |
|---|---|---|---|---|
| Nr. | i.D. mm | Länge cm | | |
| 1039 | 8 | 5 | | HFIP-LG Guard |
| 632 | 7,5 | 30 | Styrol-Divi nyl benzol | PL HFIPGel |
| 1321 | 7,5 | 30 | SDV | PL HFIPgel |

| | | | | |
|---|---|---|---|---|
| Bodenzahl der Kombination bei der angegebenen Durchflussgeschwindigkeit: 20000. Detektor: DRI Agilent 1100 | | | | |

Die Kalibrierung erfolgte mit eng verteilten PMMA-Standards der Fa. PSS mit Molekulargewichten von M = 800 bis M = 1.820.000. Die Werte außerhalb dieses Elutionsbereiches wurden extrapoliert.

Die Auswertung erfolgte bis zu einer Molmasse von größer gleich ca. 124 g/mol (19,98 ml).

Als Basen eignen sich anorganische Basen wie Hydroxide, beispielsweise Alkali- und Erdalkalihydroxide wie Lithiumhydroxid, Natriumhydroxid, Kaliumhydroxid, Magnesiumhydroxid, Calciumhydroxid, Bariumhydroxid, oder Carbonate, beispielsweise Natriumcarbonat, Magnesiumcarbonat, Calciumcarbonat oder deren Gemische, bevorzugt Lithiumhydroxid, Natriumhydroxid, Kaliumhydroxid, Magnesiumhydroxid, Calciumhydroxid oder deren Gemische, besonders bevorzugt Natriumhydroxid in fester oder in flüssiger Form. Hydroxide in flüssiger Form sind in der Regel wässrige oder alkoholische 0,01 bis 99,9 gew.-%ige Lösungen, bevorzugt wässrige 5 bis 50 gew.-%ige Lösungen.

Als Säuren eignen sich anorganische Säure wie Salpetersäure, Phosphorsäure, Salzsäure oder Schwefelsäure bzw. organische Säuren, beispielsweise Ameisensäure, Essigsäure, Oxalsäure, Maleinsäure oder saure Salze , bevorzugt organische Säuren wie Ameisensäure, Essigsäure, Oxalsäure, Maleinsäure oder saure Salze, besonders bevorzugt Ameisensäure.

Die Säuren werden in der Regel als wässrige Lösungen eingesetzt, bevorzugt als 0,1-30 Gew.-%ige Lösungen.

Die erfindungsgemäß hergestellten Harze können gegebenenfalls vor der Verwendung mit Harnstoff-Formaldehyd-Kondensationsprodukten, die ein Gewichtsverhältnis Formaldehyd zu Harnstoff von 0,85:1 bis 2:1 aufweisen und/oder mit Harnstoff in fester Form oder wässriger Lösung abgemischt werden. Die Abmischung erfolgt in der Regel mit Harnstoff-Formaldehyd-Kondensationsprodukten, vorteilhaft in einem Gewichtsverhältnis von erfindungsgemäß hergestelltem Harz zu Harnstoff-Formaldehyd-Kondensationsprodukten von 99:1 bis 10:90, insbesondere 95:5 bis 50:50. Die Abmischung mit Harnstoff erfolgt in der Regel in einem Verhältnis von erfindungsgemäß hergestelltem Harz zu Harnstoff oder Harnstofflösung in einem Verhältnis von 99:1 bis 70:30, insbesondere 98:2 bis 80:20.

Der Feststoffgehalt der erfindungsgemäß hergestellten Harze beträgt in der Regel 50 bis 80 Gew.-%, bevorzugt 60 bis 70 Gew.-%. Der Feststoffgehalt kann bestimmt werden, indem flüssiges Harz (z.B. 1 g) in ein flaches Blechschälchen eingewogen wird und dann 2 Stunden bei 120°C getrocknet und rückgewogen wird (M. Dunky, P. Niemz, Holzwerkstoffe und Leime, Springer, Berlin, 2002, Seite 458).

Weitere Additive können in Mengen von bis zu 20 Gew.-%, also 0 bis 20 Gew.-%, bevorzugt 0 bis 10 Gew.-% in diese Harze eingearbeitet werden. Dabei kann es sich z.B. um Alkohole wie Ethylenglykol, Diethylenglykol oder Saccharide handeln. Ebenso können wasserlösliche Polymere auf der Basis Acrylamid, Ethylenoxid, N-Vinylpyrrolidon, Vinylacetat sowie Copolymere mit diesen Monomeren eingesetzt werden. Den Harzen können Füllstoffe zugesetzt werden, wie beispielsweise Cellulosefasern, oder deren Gemische. Außerdem können sie Carbonate, Hydrogencarbonate, Sulfite, Hydrogensulfite, Disulfite, Phosphate, Hydrogenphosphate oder deren Gemische enthalten.

Die erfindungsgemäßen Harze sind in der Regel mehrere Wochen bei 20°C lagerstabil.

Die erfindungsgemäßen Harze eignen sich als Bindemittel, insbesondere zur Herstellung lignocellulosehaltiger Formkörper wie zum Beispiel Spanplatten, Faserplatten oder OSB-Platten (Oriented Strand Board). Außerdem eignen sich die erfindungsgemäßen Mischungen zur flächigen Verleimung von Holz, wie z.B. zur Herstellung von Sperrholz, Einschicht- und Mehrschichtplatten und Brettschichtholz. Besonders geeignet sind die erfindungsgemäßen Harze für die Herstellung von Faserplatten, bevorzugt MDF = Mittel-Dichte-Faserplatten, HDF = HochDichte-Faserplatten, insbesondere dann, wenn die Beleimung in der Blowline erfolgt. Beim Blowline-Verfahren wird das Harz nach der Zerfaserung des Holzes im Refiner in den Faserstrom eingedüst, der sich mit hoher Geschwindigkeit bewegt. Anschließend werden die beleimten Fasern getrocknet (M.Dunky, P.Niemz, Holzwerkstoffe und Leime, Springer, Berlin, 2002, Seite 145).

Die Reaktivität der Bindemittelmischungen beim Aushärten kann dadurch erhöht werden, dass ihnen unmittelbar vor der Verarbeitung zusätzlich ein Härter wie beispielsweise Ammoniumsalze wie Ammoniumchlorid, Ammoniumsulfat, Ammoniumnitrat, Ammoniumphosphate oder Carbonsäuren wie Ameisensäure und Oxalsäure oder Lewis-Säuren wie Aluminiumchlorid oder saure Salze wie Aluminiumsulfat oder Mineralsäuren wie Schwefelsäure oder deren Gemische zugesetzt werden. Die Härter können mit dem wässrigen Bindemittel vermischt ("Leimflotte") und dann beispielsweise auf Späne oder Fasern gesprüht oder die Härter können getrennt vom Bindemittel auf das Substrat aufgetragen werden.

Die erfindungsgemäßen lignocellulosehaltigen Formkörper, z.B. Spanplatten, OSB-Platten oder Faserplatten, lassen sich beispielsweise herstellen, indem man 5 bis 30 Gew.-% Festharz, bezogen auf lignocellulosehaltiges Material bei Pressentemperaturen von 120 bis 250°C unter Druck verpresst. Zusätzlich können Härter, wie oben beschrieben, mit verwendet werden. Unter diesen Bedingungen härtet das Aminoplastharz in der Regel rasch aus und man erhält Holzwerkstoffe mit guten mechanischen Eigenschaften und niedriger Formaldehyd-Emission.

### Beispiele

### Beispiel 1

Herstellung von Leim 1

Durch kontinuierliche Dosierung wurden pro Stunde 7,16 Gewichtsteile einer wässrigen 49%igen Formaldehydlösung, 3,96 Gewichtsteile einer wässrigen 68%igen Harnstofflösung und ein Gewichtsteil Wasser in den ersten Kessel (A1) einer Rührkesselkaskade, bestehend aus 6 Rührkesseln, eingebracht und durch Zugabe von 25%iger wässriger NaOH-Lösung auf einen pH von 6,7 eingestellt. In den zweiten Kessel (B1) der Rührkesselkaskade wurden stündlich 0,52 Gewichtsteile einer wässrigen 68%igen Harnstofflösung eindosiert. Der pH wird durch Zugabe von 10%iger wässriger Ameisensäurelösung auf 4,2-4,3 eingestellt. Im dritten Kessel (B2) wurden stündlich 0,43 Gewichtsteile einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3) und fünften Kessel (B4) in den 6. Kessel überführt. Im 6. Rührkessel (C1) wurden pro Stunde 1,74 Gewichtsteile einer wässrigen 68%igen Harnstofflösung eindosiert. Der pH wurde durch Zugabe von 25%iger wässriger NaOH-Lösung auf 6,5 eingestellt.

Die Temperaturen in den einzelnen Kesseln betrugen:

| Vorrichtung | A | B | | | | C |
|---|---|---|---|---|---|---|
| Kessel | A1 | B1 | B2 | B3 | B4 | C1 |
| Temp. [°C] | 82 | 102 | 103 | 102 | 102 | 96 |

Die erhaltene Aminoplastlösung wurde mit 3,75 Gewichtsteilen (pro h) wässriger 68%iger Harnstofflösung versetzt und kontinuierlich unter reduziertem Druck auf einen Trockengehalt von etwa 65% eingedampft. Es wurde auf etwa 20°C abgekühlt und durch Zugabe von 25%iger wässriger NaOH-Lösung ein pH von 8,9 eingestellt.
Man erhielt ein Aminoplastharz mit folgenden Eigenschaften:
Molverhältnis (F/U): 0,99
Viskosität bei 20°C (Scherrate 313 1/s): 394 mPas
Molmasse: Gewichtsmittel M_{w} = 35.570 g/mol, Dispersität M_{w}/Mₙ = 49,6 (Mₙ = Zahlenmittel)

### Beispiel 2

### Herstellung von Leim 2

Durch kontinuierliche Dosierung wurden pro Stunde 10,0 Gewichtsteile einer wässrigen 49%igen Formaldehydlösung und 5,52 Gewichtsteile einer wässrigen 68%igen Harnstofflösung in den ersten Kessel (A1) einer Rührkesselkaskade bestehend aus 7 Rührkesseln eingebracht und durch Zugabe von 25%iger wässriger NaOH-Lösung auf einen pH von 6,7 eingestellt. In den zweiten Kessel (B1) der Rührkesselkaskade wurden stündlich 0,72 Gewichtsteile einer wässrigen 68%igen Harnstofflösung eindosiert. Der pH wurde durch Zugabe von 10%iger wässriger Ameisensäurelösung auf 4,5 eingestellt. Im dritten Kessel (B2) wurden stündlich 0,59 Gewichtsteile einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3) und fünften Kessel (B4) in den 6. Kessel überführt. Im 6. Rührkessel (C1) wurden pro Stunde 2,23 Gewichtsteile einer wässrigen 68%igen Harnstofflösung eindosiert. Der pH wurde durch Zugabe von 25%iger wässriger NaOH-Lösung auf 6,7 eingestellt.

Die Temperaturen in den einzelnen Kesseln betrugen:

| Vorrichtung | A | B | | | | C | |
|---|---|---|---|---|---|---|---|
| Kessel | A1 | B1 | B2 | B3 | B4 | C1 | C2 |
| Temp. [°C] | 82 | 102 | 103 | 102 | 102 | 96 | 96 |

Die erhaltene Aminoplastlösung wurde nach Durchlaufen des siebten Kessels (C2), was ohne weitere Änderung von Molverhältnis oder pH erfolgte mit 3,26 Gewichtsteilen (pro h) wässriger 68%iger Harnstofflösung versetzt und kontinuierlich unter reduziertem Druck auf einen Trockengehalt von etwa 64,5% eingedampft. Es wurde auf etwa 20°C abgekühlt und durch Zugabe von 25%iger wässriger NaOH-Lösung ein pH von 8,4 eingestellt.
Man erhielt ein Aminoplastharz mit folgenden Eigenschaften:
Molverhältnis (F/U): 1,17
Viskosität bei 20°C (Scherrate 313 1/s): 480 mPas
Molmasse: Gewichtsmittel M_{w} = 21.160 g/mol, Dispersität M_{w}/Mₙ = 33,5 (Mₙ = Zahlenmittel)

### Beispiel 3

### Herstellung von Leim 3

Durch kontinuierliche Dosierung wurden pro Stunde 9,31 Gewichtsteile einer wässrigen 49%igen Formaldehydlösung, 5,14 Gewichtsteile einer wässrigen 68%igen Harnstofflösung und 1,3 Gewichtsteile Wasser in den ersten Kessel (A1) einer Rührkesselkaskade bestehend aus 6 Rührkesseln eingebracht und durch Zugabe von 25%iger wässriger NaOH-Lösung auf einen pH von 6,9 eingestellt. In den zweiten Kessel (B1) der Rührkesselkaskade wurden stündlich 0,67 Gewichtsteile einer wässrigen 68%igen Harnstofflösung eindosiert. Der pH wurde durch Zugabe von 10%iger wässriger Ameisensäurelösung auf 4,4 eingestellt. Im dritten Kessel (B2) wurden stündlich 0,55 Gewichtsteile einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3) und fünften Kessel (B4) in den 6. Kessel überführt. Im 6. Rührkessel (C1) wurden pro Stunde 2,26 Gewichtsteile einer wässrigen 68%igen Harnstofflösung eindosiert. Der pH wurde durch Zugabe von 25%iger wässriger NaOH-Lösung auf 6,5 eingestellt.

Die Temperaturen in den einzelnen Kesseln betrugen:

| Vorrichtung | A | B | | | | C |
|---|---|---|---|---|---|---|
| Kessel | A1 | B1 | B2 | B3 | B4 | C1 |
| Temp. [°C] | 82 | 102 | 103 | 102 | 102 | 96 |

Die erhaltene Aminoplastlösung wurde mit 5,54 Gewichtsteilen (pro h) wässriger 68%iger Harnstofflösung versetzt und kontinuierlich unter reduziertem Druck auf einen Trockengehalt von etwa 65% eingedampft. Es wurde auf etwa 20°C abgekühlt und durch Zugabe von 25%iger wässriger NaOH-Lösung ein pH von 8,3 eingestellt.
Man erhielt ein Aminoplastharz mit folgenden Eigenschaften:
Molverhältnis (F/U): 0,95
Viskosität bei 20°C (Scherrate 313 1/s): 341 mPas
Molmasse: Gewichtsmittel M_{w} = 27.430 g/mol, Dispersität M_{w}/Mₙ = 40,9 (Mₙ = Zahlenmittel)

### Beispiel 4

### Herstellung von Leim 4

Durch kontinuierliche Dosierung wurden pro Stunde 16,82 Gewichtsteile einer wässrigen 49%igen Formaldehydlösung, 9,29 Gewichtsteile einer wässrigen 68%igen Harnstofflösung und 2,35 Gewichtsteile Wasser in den ersten Kessel (A1) einer Rührkesselkaskade bestehend aus 6 Rührkesseln eingebracht und durch Zugabe von 25%iger wässriger NaOH-Lösung auf einen pH von 6,7 eingestellt. In den zweiten Kessel (B1) der Rührkesselkaskade wurden stündlich 1,21 Gewichtsteile einer wässrigen 68%igen Harnstofflösung eindosiert. Der pH wurde durch Zugabe von 10%iger wässriger Ameisensäurelösung auf 4,2-4,3 eingestellt. Im dritten Kessel (B2) wurde stündlich ein Gewichtsteil einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3) und fünften Kessel (B4) in den 6. Kessel überführt. Im 6. Rührkessel (C1) wurden pro Stunde 4,08 Gewichtsteile einer wässrigen 68%igen Harnstofflösung eindosiert. Der pH wurde durch Zugabe von 25%iger wässriger NaOH-Lösung auf 6,5 eingestellt.

Die Temperaturen in den einzelnen Kesseln betrugen:

| Vorrichtung | A | B | | | | C |
|---|---|---|---|---|---|---|
| Kessel | A1 | B1 | B2 | B3 | B4 | C1 |
| Temp. [°C] | 83 | 102 | 103 | 102 | 102 | 96 |

Die erhaltene Aminoplastlösung wurde mit 7,70 Gewichtsteilen (pro h) wässriger 68%iger Harnstofflösung versetzt und kontinuierlich unter reduziertem Druck auf einen Trockengehalt von etwa 64% eingedampft. Es wurde auf etwa 20°C abgekühlt und durch Zugabe von 25%iger wässriger NaOH-Lösung ein pH von 9,5 eingestellt.
Man erhielt ein Aminoplastharz mit folgenden Eigenschaften:
Molverhältnis (F/U): 1,04
Viskosität bei 20°C (Scherrate 313 1/s): 425 mPas
Molmasse: Gewichtsmittel M_{w} = 33.910 g/mol, Dispersität M_{w}/Mₙ = 52,7 (Mₙ = Zahlenmittel)

### Beispiel 5

### Herstellung von Leim 5

Durch kontinuierliche Dosierung wurden pro Stunde 13,80 Gewichtsteile einer wässrigen 49%igen Formaldehydlösung, 7,62 Gewichtsteile einer wässrigen 68%igen Harnstofflösung und 1,93 Gewichtsteilen Wasser in den ersten Kessel (A1) einer Rührkesselkaskade bestehend aus 7 Rührkesseln eingebracht und durch Zugabe von 25%iger wässriger NaOH-Lösung auf einen pH von 6,7 eingestellt. In den zweiten Kessel (B1) der Rührkesselkaskade wurde stündlich ein Gewichtsteil einer wässrigen 68%igen Harnstofflösung eindosiert. Der pH wurde durch Zugabe von 10%iger wässriger Ameisensäurelösung auf 4,2-4,3 eingestellt. Im dritten Kessel (B2) wurden stündlich 0,82 Gewichtsteile einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3), fünften (B4) und sechsten Kessel (B5) in den 7. Kessel überführt. Im 7. Rührkessel (C1) wurden pro Stunde 3,34 Gewichtsteile einer wässrigen 68%igen Harnstofflösung eindosiert. Der pH wurde durch Zugabe von 25%iger wässriger NaOH-Lösung auf 6,3 eingestellt.

Die Temperaturen in den einzelnen Kesseln betrugen:

| Vorrichtung | A | B | | | | | C |
|---|---|---|---|---|---|---|---|
| Kessel | A1 | B1 | B2 | B3 | B4 | B5 | C1 |
| Temp. [°C] | 82 | 102 ± 1 | | | | | 96 |

Die erhaltene Aminoplastlösung wurde mit 7,12 Gewichtsteilen (pro h) wässriger 68%iger Harnstofflösung versetzt und kontinuierlich unter reduziertem Druck auf einen Trockengehalt von etwa 63,5% eingedampft. Es wurde auf etwa 20°C abgekühlt und durch Zugabe von 25%iger wässriger NaOH-Lösung ein pH von 9,3 eingestellt.
Man erhielt ein Aminoplastharz mit folgenden Eigenschaften:
Molverhältnis (F/U): 1,00
Viskosität bei 20°C (Scherrate 313 1/s): 377 mPas
Molmasse: Gewichtsmittel M_{w} = 30.650 g/mol, Dispersität M_{w}/Mₙ = 42,9 (Mₙ = Zahlenmittel)

### Beispiel 6

### Herstellung von Leim 6

Durch kontinuierliche Dosierung wurden pro Stunde 4,93 Gewichtsteile einer wässrigen 49%igen Formaldehydlösung, 2,73 Gewichtsteile einer wässrigen 68%igen Harnstofflösung und ein Gewichtsteil Wasser in den ersten Kessel (A1) einer Rührkesselkaskade bestehend aus 6 Rührkesseln eingebracht und durch Zugabe von 25%iger wässriger NaOH-Lösung auf einen pH von 6,7 eingestellt. In den zweiten Kessel (B1) der Rührkesselkaskade wurden stündlich 0,36 Gewichtsteile einer wässrigen 68%igen Harnstofflösung eindosiert. Der pH wurde durch Zugabe von 10%iger wässriger Ameisensäurelösung auf 4,3-4,4 eingestellt. Im dritten Kessel (B2) wurden stündlich 0,29 Gewichtsteile einer wässrigen 68%igen Harnstofflösung zugegeben. Das Reaktionsgemisch wurde ohne weitere Änderung des Molverhältnisses (Formaldehyd : Harnstoff) und bei nahezu konstantem pH-Wert über den vierten (B3) und fünften Kessel (B4) in den 6. Kessel überführt. Im 6. Rührkessel (C1) wurden pro Stunde 1,20 Gewichtsteile einer wässrigen 68%igen Harnstofflösung eindosiert. Der pH wird durch Zugabe von 25%iger wässriger NaOH-Lösung auf 6,6-6,7 eingestellt.

Die Temperaturen in den einzelnen Kesseln betragen:

| Vorrichtung | A | B | | | | C |
|---|---|---|---|---|---|---|
| Kessel | A1 | B1 | B2 | B3 | B4 | C1 |
| Temp. [°C] | 82 | 102 | 103 | 102 | 102 | 96 |

Die erhaltene Aminoplastlösung wurde mit 2,82 Gewichtsteilen (pro h) wässriger 68%iger Harnstofflösung versetzt und kontinuierlich unter reduziertem Druck auf einen Trockengehalt von etwa 66% eingedampft. Es wurde auf etwa 20°C abgekühlt und durch Zugabe von 25%iger wässriger NaOH-Lösung ein pH von 9,4 eingestellt.
Man erhielt ein Aminoplastharz mit folgenden Eigenschaften:
Molverhältnis (F/U): 0,96
Viskosität bei 20°C (Scherrate 313 1/s): 411 mPas
Molmasse: Gewichtsmittel M_{w} = 26.600 g/mol, Dispersität M_{w}/Mₙ = 41,0 (Mₙ = Zahlenmittel)

### Anwendungstechnische Beispiele

Allgemeine Beschreibung der Herstellung der Holzwerkstoffe (Labor):
Herstellung der Spanplatten

In einem Mischer werden Fichtespäne (Restfeuchte 2-4%) mit Leim, Formaldehydfänger, Emulsion, Härter und gegebenenfalls PMDI gemischt. Die Mengenverhältnisse werden dabei so gewählt, dass für Beleimungsgrad (= Quotient aus der Masse an Trockensubstanz Leim und der Masse an Trockensubstanz Holz) und Feuchtegehalt die gewünschten Werte erhalten werden. Die beleimten Späne werden anschließend zu einem dreischichtigen Spänekuchen (Massenverhältnis Deckschicht-Mittelschicht-Deckschicht = ca. 17 : 66 : 17) geschüttet.

Der Spänekuchen wird zunächst kalt vorverdichtet und anschließend in einer Heißpresse gepresst. Nach Abkühlung werden die erhaltenen Spanplatten besäumt, geschliffen, zu Prüfkörpern zersägt und geprüft.

### Herstellung von MDF/HDF-Platten

Zunächst werden Hackschnitzel (Fichte) in einem Refiner zerfasert. Die Fasern werden danach in einem Stromtrockner auf ca. 4% Endfeuchtegehalt getrocknet. In einem Mischer werden die Fasern mit Leim, Formaldehydfänger, Emulsion und gegebenenfalls Härter gemischt. Die Mengenverhältnisse werden dabei so gewählt, dass für Beleimungsgrad (= Quotient aus der Masse an Trockensubstanz Leim und der Masse an Trockensubstanz Holz) und Feuchtegehalt die gewünschten Werte erhalten werden. Die beleimten Fasern werden anschließend zu einem Faserkuchen geschüttet.
Dieser wird zunächst kalt vorverdichtet und anschließend in einer Heißpresse gepresst. Nach Abkühlung werden die erhaltenen Faserplatten besäumt, geschliffen, zu Prüfkörpern zersägt und geprüft.

Verwendete Abkürzunaen:
- AN: Ammoniumnitrat
- AS: Ammoniumsulfat
- atro: Trockenmasse Holz
- DS: Deckschicht
- FA: Formaldehyd
- FS: Feststoff
- HA: Harnstoff
- Halö: Harnstoff-Lösung
- MS: Mittelschicht
- FH: Festharz (festes Harz) Feststoff Harz

### Untersuchung der Holzwerkstoffe

### Dichte

Die Bestimmung der Dichte erfolgte 24 Stunden nach Herstellung nach EN 1058.

### Querzugsfestigkeit

Die Bestimmung der Querzugsfestigkeit erfolgt nach EN 319.

### Quellwerte

Die Bestimmung der Quellwerte nach 24 h Wasserlagerung erfolgte nach EN 317.

### Formaldehydemission (Perforatormethode)

Die Bestimmung der Formaldehydemission erfolgte nach EN 120.

### Formaldehydemission (Prüfkammermethode)

Die Bestimmung der Formaldehydemission erfolgte nach EN 717-1.

### Beispiel 7

Ein Leim hergestellt gemäß Beispiel 6 wurde für die Produktion von 17,7 mm starken Spanplatten mit einer Dichte von 650 kg/m³ eingesetzt (Presstemperatur 200°C, Pressfaktor 10 s/mm).

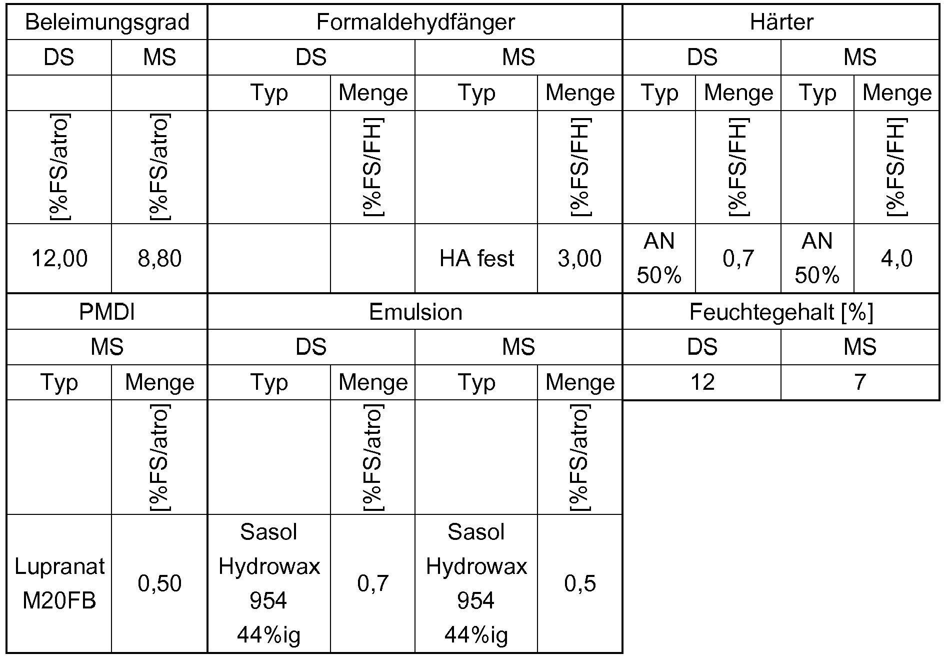

**Prüfergebnisse:**

| Querzug | Quellung 24h | Perforator | 1m³ Kammer |
|---|---|---|---|
| | | (Formaldehyd-Emission) | (Formaldehyd-Emission) |
| [N/mm²] | [%] | [mg HCHO / 100g atro] | [ppm] |
| 0,48 | 13,80 | 2,3 | 0,042 |

### Beispiel 8

Ein Leim hergestellt gemäß Beispiel 6 wurde für die Produktion von 7,4 mm starken HDF-Platten mit einer Dichte von 860 kg/m³ eingesetzt (Presstemperatur 190°C, Pressfaktor 15 s/mm).

| Beleimungsgrad | Formaldehydfänger | | Härter | | Emulsion | | Feuchtegehalt |
|---|---|---|---|---|---|---|---|
| | Typ | Menge | Typ | Menge | Typ | Menge | [%] |
| [%FS/atro] | | [%FS/FH] | | [%FS/FH] | | [%FS/FH] | |
| 13,1 | Halö 40% | 2,7 | ohne | 0,0 | Sasol Hydrowax 954 44%ig | 3,0 | 11 |

**Prüfergebnisse:**

| Querzug [N/mm²] | Quellung 24h [%] | Perforator (Formaldehyd-Emission) [mg HCHO / 100g atro] | 1m³ Kammer (Formaldehyd-Emission) [ppm] |
|---|---|---|---|
| 1,88 | 13,60 | 6,6 | 0,084 |

### Beispiel 9

Ein Leim hergestellt gemäß Beispiel 1 wurde für die Produktion von 18 mm starken MDF-Platten mit einer Dichte von 730 kg/m³ eingesetzt (Presstemperatur 190°C, Pressfaktor 12 s/mm).

| Beleimungsgrad | Formaldehydfänger | | Härter | | Emulsion | | Feuchtegehalt |
|---|---|---|---|---|---|---|---|
| | Typ | Menge | Typ | Menge | Typ | Menge | [%] |
| [%FS/atro] | | [%FS/FH] | | [%FS/FH] | | [%FS/FH] | |
| 14,0 | Halö 40% | 2,0 | AS 40% | 0,5 | Sasol Hydrowax 954 44%ig | 0,5 | 11 |

**Prüferaebnisse:**

| Querzug | Quellung 24h | Perforator | 1m³ Kammer |
|---|---|---|---|
| | | (Formaldehyd-Emission) | (Formaldehyd-Emission) |
| [N/mm²] | [%] | [mg HCHO/100g atro] | [ppm] |
| 0,95 | 17,40 | 7,1 | 0,068 |

### Beispiel 10

Ein Leim hergestellt gemäß Beispiel 3 wurde für die Produktion von 2,9 mm starken HDF-Platten mit einer Dichte von 820 kg/m³ eingesetzt (Presstemperatur 190°C, Pressfaktor 20 s/mm).

| Beleimungsgrad | Formaldehydfänger | | Härter | | Emulsion | | Feuchtegehalt |
|---|---|---|---|---|---|---|---|
| | Typ | Menge | Typ | Menge | Typ | Menge | [%] |
| [%FS/atro] | | [%FS/FH] | | [%FS/FH] | | [%FS/FH] | |
| 11,5 | Halö 40% | 9,20 | AS 40% | 3,0 | Sasol Hydrowax 954 44%ig | 0,3 | 11 |

**Prüfergebnisse:**

| Querzug | Perforator | 1m³ Kammer |
|---|---|---|
| | (Formaldehyd-Emission) | (Formaldehyd-Emission) |
| [N/mm²] | [mg HCHO / 100g atro] | [ppm] |
| 1,28 | 3,8 | 0,042 |

### Beispiel 11

Ein Leim hergestellt gemäß Beispiel 2 wurde für die Produktion von 18,7 mm starken Spanplatten mit einer Dichte von 650 kg/m³ eingesetzt (Presstemperatur 200°C, Pressfaktor 10 s/mm).

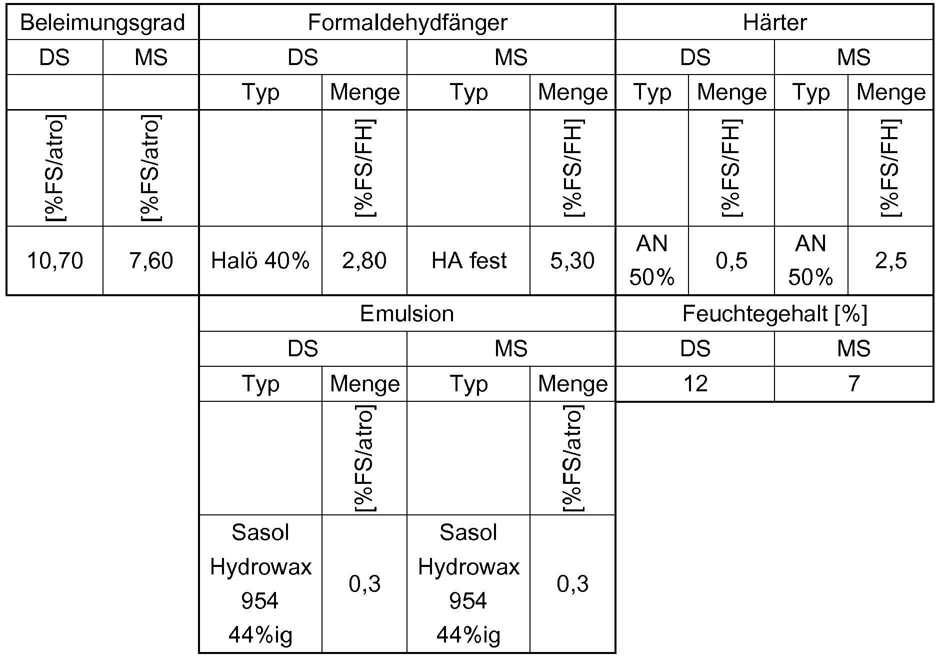

**Prüfergebnisse:**

| Querzug | Quellung 24h | Perforator (Formaldehyd-Emission) | 1m³ Kammer (Formaldehyd-Emission) |
|---|---|---|---|
| [N/mm²] | [%] | [mg HCHO / 100g atro] | [ppm] |
| 0,48 | 24,70 | 5,2 | 0,132 |

## Patentansprüche

1. Verfahren zur Herstellung von Aminoplastlösungen durch diskontinuierliche oder kontinuierliche Kondensation von Aminoplastbildnern mit Formaldehyd in einer in Reihe geschalteten Rührkesselkaskade mit mindestens drei Rührkesselvorrichtungen A, B und C, **dadurch gekennzeichnet, dass** man
a) in Vorrichtung A eine Mischung enthaltend Formaldehyd und Harnstoff im Molverhältnis von 2,3:1 bis 2,9:1 und Wasser bei einem pH Wert von 6 bis 8, eingestellt mittels einer Base, bei einer Temperatur von 80 bis 85°C, wobei Vorrichtung A aus einem oder mehreren parallelen oder in Reihe geschalteten Rührkesseln besteht,
b) in Vorrichtung B bei einem Molverhältnis von Formaldehyd zu Harnstoff von 1,9:1 bis 2,6:1, wobei Vorrichtung B aus einem oder mehreren Rührkesseln besteht, in der das Molverhältnis von Formaldehyd zu Harnstoff, gegebenenfalls durch weitere Harnstoffzugabe, stufenweise auf minimal 1,9:1 abgesenkt wird, bei einem pH-Wert von 3,5 bis 5,5, der nahezu konstant gehalten wird, bei einer Temperatur von 100 bis 105°C und einer mittleren Verweilzeit von 10 bis 90 min in der gesamten Vorrichtung B umsetzt,
c) in Vorrichtung C bei einer Temperatur von 90 bis 100°C den pH Wert auf mindestens 5,9 erhöht und das Molverhältnis von Formaldehyd zu Harnstoff auf 1,7:1 bis 1,4:1 senkt, wobei Vorrichtung C aus einem oder mehreren Rührkesseln besteht und
d) durch Zugabe von Harnstoff bei Temperaturen von 15 bis 100°C ein Endmolverhältnis von Formaldehyd zu Harnstoff von 0,7:1 bis 1,28:1 und einen pH Wert von mindestens 7 einstellt.

2. Verfahren zur Herstellung von Aminoplastlösungen nach Anspruch 1, **dadurch gekennzeichnet, dass** man die Kondensation von Aminoplastbildnern mit Formaldehyd in einer in Reihe geschalteten Rührkesselkaskade kontinuierlich durchführt.

3. Verfahren zur Herstellung von Aminoplastlösungen nach Anspruch 1 oder 2, **dadurch gekennzeichnet, dass** das Molverhältnis zwischen der Mischung enthaltend Formaldehyd und Harnstoff zu Wasser in Vorrichtung A 0,2:1 bis 1,8:1 beträgt.

4. Verfahren zur Herstellung von Aminoplastlösungen nach einem der Ansprüche 1 bis 3, **dadurch gekennzeichnet, dass** man den pH-Wert in Vorrichtung B nahezu konstant mit einer Schwankungsbreite von ±0,3 hält.

5. Verfahren zur Herstellung von Aminoplastlösungen nach einem der Ansprüche 1 bis 4, **dadurch gekennzeichnet, dass** man nach d) eine Aufkonzentration durch Destillation, gegebenenfalls unter reduziertem Druck, zu Endviskositäten von 250 bis 700 mPas durchführt.

6. Verfahren zur Herstellung von Aminoplastlösungen nach einem der Ansprüche 1 bis 5, **dadurch gekennzeichnet, dass** man das Verfahren bei einem Druck von 0,3 bis 3 bar durchführt.

7. Verfahren zur Herstellung von Aminoplastlösungen nach einem der Ansprüche 1 bis 6, **dadurch gekennzeichnet, dass** die Vorrichtung B aus mindestens 2 Rührkesseln besteht, wobei man das Molverhältnis von Formaldehyd zu Harnstoff im ersten Kessel der Vorrichtung B auf 2,6:1 bis 2,25:1 einstellt und dann in einem weiteren Kessel der Vorrichtung B durch Zugabe von Harnstoff in fester oder gelöster Form das Molverhältnis auf 2,2:1 bis 1,9:1 absenkt.

8. Verfahren zur Herstellung von Aminoplastlösungen nach einem der Ansprüche 1 bis 6, **dadurch gekennzeichnet, dass** die Vorrichtung B aus mindestens 3 Rührkesseln besteht, wobei man das Molverhältnis von Formaldehyd zu Harnstoff im ersten Kessel der Vorrichtung B auf 2,6:1 bis 2,3:1 einstellt, in einem weiteren Kessel der Vorrichtung B durch Zugabe von Harnstoff in fester oder gelöster Form auf 2,25:1 bis 2,1:1 und in wiederum einem weiteren Kessel der Vorrichtung B auf 2,05:1 bis 1,9:1 absenkt.

9. Verfahren zur Herstellung von Aminoplastlösungen nach einem der Ansprüche 1 bis 8, **dadurch gekennzeichnet, dass** man die Harnstoffzugabe in d) in zwei oder mehr Schritten durchführt.

10. Verfahren zur Herstellung von Aminoplastlösungen nach einem der Ansprüche 1 bis 9, **dadurch gekennzeichnet, dass** man die Mischung vor der letzten Zugabe an Harnstoff und damit der Einstellung des Endmolverhältnisses in d) destilliert.

11. Verfahren zur Herstellung von Aminoplastlösungen nach einem der Ansprüche 1 bis 10, **dadurch gekennzeichnet, dass** man die Menge der Säurezugabe in Vorrichtung B so wählt, dass die hergestellten Harnstoff-Formaldehyd-Harze in der Lösung ein Gewichtsmittel des Molekulargewichts Mw von 15.000 bis 50.000 g/mol aufweisen.

12. Aminoplastlösungen nach einem der Ansprüche 1 bis 11, **dadurch gekennzeichnet, dass** der Feststoffgehalt 50 bis 80 Gew.-% beträgt.

13. Verwendung der Aminoplastlösungen nach einem der Ansprüche 1 bis 12 gemischt mit 0 bis 20 Gew.-% Additive als Bindemittel, insbesondere zur Herstellung lignocellulosehaltiger Formkörper.

14. Verwendung der Aminoplastlösungen nach einem der Ansprüche 1 bis 12 gemischt mit 0 bis 20 Gew.-% Additive als flächige Verleimung von Holz.

15. Verwendung der Aminoplastlösungen nach einem der Ansprüche 1 bis 12 gemischt mit 0 bis 20 Gew.-% Additive als Leime für die Herstellung von Spanplatten.

16. Verwendung der Aminoplastlösungen nach einem der Ansprüche 1 bis 12 gemischt mit 0 bis 20 Gew.-% Additive als Leime für die Herstellung von Faserplatten, bevorzugt mittel-dichte Faserplatten oder hochdichte Faserplatten.

17. Verfahren zur Herstellung von Faserplatten, **dadurch gekennzeichnet, dass** man im Blowline-Verfahren die Aminoplastlösungen, hergestellt nach einem der Ansprüche 1 bis 11, oder nach Anspruch 12 nach der Zerfaserung des Holzes im Refiner in den Faserstrom eindüst, der sich mit hoher Geschwindigkeit bewegt und anschließend trocknet.

18. Lignocellulosehaltige Formkörper, hergestellt indem man 5 bis 30 Gew.-% Festharz, bezogen auf lignocellulosehaltiges Material, und gegebenenfalls Härter bei Pressentemperaturen von 120 bis 250°C unter Druck verpresst.

## Claims

1. A process for preparing aminoplast solutions by discontinuous or continuous condensation of aminoplast formers with formaldehyde in a serial cascade of at least three stirred tank apparatus A, B, and C, said process comprising
a) in apparatus A, reacting a mixture comprising formaldehyde and urea in a molar ratio of 2.3:1 to 2.9:1 and water at a pH of 6 to 8, set by means of a base, at a temperature of 80 to 85°C, where apparatus A consists of one or more stirred tanks in parallel or in series,
b) in apparatus B, reacting said mixture at a molar ratio of formaldehyde to urea of 1.9:1 to 2.6:1, where apparatus B consists of one or more stirred tanks, wherein the molar ratio of formaldehyde to urea is lowered, optionally by further addition of urea, in stages to not less than 1.9:1, at a pH of 3.5 to 5.5, which is kept virtually constant, at a temperature of 100 to 105°C, and with a mean residence time of 10 to 90 minutes in the entire apparatus B,
c) in apparatus C, at a temperature of 90 to 100°C, raising the pH to at least 5.9 and lowering the molar ratio of formaldehyde to urea to 1.7:1 to 1.4:1, where apparatus C consists of one or more stirred tanks, and
d) by adding urea, at temperatures of 15 to 100°C, setting a final molar ratio of formaldehyde to urea of 0.7:1 to 1.28:1 and a pH of at least 7.

2. The process for preparing aminoplast solutions according to claim 1, wherein the condensation of aminoplast formers with formaldehyde is carried out continuously in a cascade of stirred tanks in series.

3. The process for preparing aminoplast solutions according to claim 1 or 2, wherein the molar ratio between the mixture comprising formaldehyde and urea to water in apparatus A is 0.2:1 to 1.8:1.

4. The process for preparing aminoplast solutions according to any of claims 1 to 3, wherein the pH in apparatus B is kept virtually constant within a fluctuation range of ±0.3.

5. The process for preparing aminoplast solutions according to any of claims 1 to 4, wherein d) is followed by distillative concentration, optionally under reduced pressure, to final viscosities of 250 to 700 mPas.

6. The process for preparing aminoplast solutions according to any of claims 1 to 5, which is carried out under a pressure of 0.3 to 3 bar.

7. The process for preparing aminoplast solutions according to any of claims 1 to 6, wherein apparatus B consists of at least two stirred tanks, the molar ratio of formaldehyde to urea in the first tank of apparatus B being set at 2.6:1 to 2.25:1 and then being lowered in a further tank of apparatus B, by addition of urea in solid or dissolved form, to 2.2:1 to 1.9:1.

8. The process for preparing aminoplast solutions according to any of claims 1 to 6, wherein apparatus B consists of at least three stirred tanks, the molar ratio of formaldehyde to urea in the first tank of apparatus B being set at 2.6:1 to 2.3:1, being lowered in a further tank of apparatus B, by addition of urea in solid or dissolved form, to 2.25:1 to 2.1:1, and being lowered in turn in a further tank of apparatus B to 2.05:1 to 1.9:1.

9. The process for preparing aminoplast solutions according to any of claims 1 to 8, wherein the addition of urea in d) is carried out in two or more steps.

10. The process for preparing aminoplast solutions according to any of claims 1 to 9, wherein the mixture is distilled before the final addition of urea and hence before the setting of the final molar ratio in d).

11. The process for preparing aminoplast solutions according to any of claims 1 to 10, wherein the amount of the addition of acid in apparatus B is selected such that the urea-formaldehyde resins prepared in the solution have a weight-average molecular weight M_{w} of 15 000 to 50 000 g/mol.

12. An aminoplast solution according to any of claims 1 to 11, wherein the solids content is 50 to 80 wt%.

13. The use of the aminoplast solution according to any of claims 1 to 12 in a mixture with 0 to 20 wt% of additives as a binder, more particularly for producing lignocellulosic moldings.

14. The use of the aminoplast solutions according to any of claims 1 to 12 in a mixture with 0 to 20 wt% of additives as sheetlike gluing of wood.

15. The use of the aminoplast solutions according to any of claims 1 to 12 in a mixture with 0 to 20 wt% of additives as glues for producing chipboard panels.

16. The use of the aminoplast solutions according to any of claims 1 to 12 in a mixture with 0 to 20 wt% of additives as glues for producing fiberboard panels, preferably medium-density fiberboard or high-density fiberboard panels.

17. A method for producing fiberboard panels, which comprises, in a blowline process, injecting the aminoplast solutions prepared according to any of claims 1 to 11, or according to claim 12, into the fiber stream, which is moving at high velocity, after the defibration of the wood in the refiner, and then carrying out drying.

18. A lignocellulosic molding produced by pressing 5 to 30 wt% of solid resin, relative to lignocellulosic material, and optionally curing agents under pressure at press temperatures from 120 to 250°C.

## Revendications

1. Procédé de fabrication de solutions d'aminoplastes par condensation discontinue ou continue d'agents de formation d'aminoplastes avec du formaldéhyde dans une cascade de cuves agitées connectées en série contenant au moins trois dispositifs à cuve agitée A, B et C, **caractérisé en ce que**
a) dans le dispositif A, un mélange contenant du formaldéhyde et de l'urée en un rapport molaire de 2,3:1 à 2,9:1 et de l'eau est ajusté à un pH de 6 à 8 avec une base, à une température de 80 à 85 °C, le dispositif A étant constitué par une ou plusieurs cuves agitées connectées en parallèle ou en série,
b) dans le dispositif B, à un rapport molaire entre le formaldéhyde et l'urée de 1,9:1 à 2,6:1, le dispositif B étant constitué par une ou plusieurs cuves agitées, dans lesquelles le rapport molaire entre le formaldéhyde et l'urée est abaissé graduellement au minimum à 1,9:1, éventuellement par ajout d'urée supplémentaire, à un pH de 3,5 à 5,5, qui est presque maintenu constant, à une température de 100 à 105 °C et un temps de séjour de 10 à 90 minutes dans l'ensemble du dispositif B,
c) dans le dispositif C à une température de 90 à 100 °C, le pH est augmenté à au moins 5,9 et le rapport molaire entre le formaldéhyde et l'urée est abaissé à 1,7:1 à 1,4:1, le dispositif C étant constitué par une ou plusieurs cuves agitées, et
d) par ajout d'urée à des températures de 15 à 100 °C, un rapport molaire final entre le formaldéhyde et l'urée de 0,7:1 à 1,28:1 et un pH d'au moins 7 sont ajustés.

2. Procédé de fabrication de solutions d'aminoplastes selon la revendication 1, **caractérisé en ce que** la condensation d'agents de formation d'aminoplastes avec du formaldéhyde est réalisée en continu dans une cascade de cuves agitées connectées en série.

3. Procédé de fabrication de solutions d'aminoplastes selon la revendication 1 ou 2, **caractérisé en ce que** le rapport molaire entre le mélange contenant le formaldéhyde et l'urée et l'eau dans le dispositif A est de 0,2:1 à 1,8:1.

4. Procédé de fabrication de solutions d'aminoplastes selon l'une quelconque des revendications 1 à 3, **caractérisé en ce que** le pH dans le dispositif B est maintenu presque constant avec une plage de fluctuation de ±0,3.

5. Procédé de fabrication de solutions d'aminoplastes selon l'une quelconque des revendications 1 à 4, **caractérisé en ce qu'**après d), une concentration par distillation, éventuellement sous pression réduite, à des viscosités finales de 250 à 700 mPas est réalisée.

6. Procédé de fabrication de solutions d'aminoplastes selon l'une quelconque des revendications 1 à 5, **caractérisé en ce que** le procédé est réalisé à une pression de 0,3 à 3 bar.

7. Procédé de fabrication de solutions d'aminoplastes selon l'une quelconque des revendications 1 à 6, **caractérisé en ce que** le dispositif B est constitué par au moins 2 cuves agitées, le rapport molaire entre le formaldéhyde et l'urée dans la première cuve du dispositif B étant ajusté de 2,6:1 à 2,25:1, puis, dans une cuve ultérieure du dispositif B, le rapport molaire étant abaissé à 2,2:1 à 1,9:1 par ajout d'urée sous forme solide ou dissoute.

8. Procédé de fabrication de solutions d'aminoplastes selon l'une quelconque des revendications 1 à 6, **caractérisé en ce que** le dispositif B est constitué par au moins 3 cuves agitées, le rapport molaire entre le formaldéhyde et l'urée dans la première cuve du dispositif B étant ajusté de 2,6:1 à 2,3:1, dans une cuve ultérieure du dispositif B, abaissé à 2,25:1 à 2,1:1 par ajout d'urée sous forme solide ou dissoute, et dans une autre cuve ultérieure du dispositif B, abaissé à 2,05:1 à 1,9:1.

9. Procédé de fabrication de solutions d'aminoplastes selon l'une quelconque des revendications 1 à 8, **caractérisé en ce que** l'ajout d'urée en d) est réalisé en deux étapes ou plus.

10. Procédé de fabrication de solutions d'aminoplastes selon l'une quelconque des revendications 1 à 9, **caractérisé en ce que** le mélange est distillé avant le dernier ajout d'urée et par conséquent l'ajustement du rapport molaire final en d).

11. Procédé de fabrication de solutions d'aminoplastes selon l'une quelconque des revendications 1 à 10, **caractérisé en ce que** la quantité d'ajout d'acide dans le dispositif B est choisie de sorte que les résines urée-formaldéhyde fabriquées dans la solution présentent une moyenne en poids du poids moléculaire M_{w} de 15 000 à 50 000 g/mol.

12. Solutions d'aminoplastes selon l'une quelconque des revendications 1 à 11, **caractérisées en ce que** la teneur en solides est de 50 à 80 % en poids.

13. Utilisation des solutions d'aminoplastes selon l'une quelconque des revendications 1 à 12 mélangées avec 0 à 20 % en poids d'additifs en tant que liant, notamment pour la fabrication de corps moulés lignocellulosiques.

14. Utilisation des solutions d'aminoplastes selon l'une quelconque des revendications 1 à 12 mélangées avec 0 à 20 % en poids d'additifs en tant qu'encollage de surface de bois.

15. Utilisation des solutions d'aminoplastes selon l'une quelconque des revendications 1 à 12 mélangées avec 0 à 20 % en poids d'additifs en tant que colle pour la fabrication de panneaux d'aggloméré.

16. Utilisation des solutions d'aminoplastes selon l'une quelconque des revendications 1 à 12 mélangées avec 0 à 20 % en poids d'additifs en tant que colle pour la fabrication de panneaux de fibres, de préférence de panneaux de fibres de densité moyenne ou de panneaux de fibres de densité élevée.

17. Procédé de fabrication de panneaux de fibres, **caractérisé en ce que** les solutions d'aminoplastes, fabriquées selon l'une quelconque des revendications 1 à 11 ou selon la revendication 12, sont injectées dans le procédé de soufflage en ligne après le défibrage du bois dans le raffineur dans le courant de fibres, qui se déplace à une vitesse élevée, puis séchées.

18. Corps moulés lignocellulosiques, fabriqués par compression de 5 à 30 % en poids d'une résine solide, par rapport au matériau lignocellulosique, et éventuellement d'un durcisseur à des températures de compression de 120 à 250 °C sous pression.
